# EUROPÄISCHE PATENTSCHRIFT

(11) **EP 0 963 378 B1**
(45) Veröffentlichungstag und Bekanntmachung des Hinweises auf die Patenterteilung: **04.04.2001**
(21) Anmeldenummer: 98910640.6
(22) Anmeldetag: 10.02.1998
(51) Int. Cl.: C08B 9/00

(54) **VERFAHREN ZUR HERSTELLUNG VON VISKOSE**
METHOD FOR VISCOSE PRODUCTION
PROCEDE DE FABRICATION DE VISCOSE

(30) Priorität: 25.02.1997 DE 19707387
(43) Veröffentlichungstag der Anmeldung: 15.12.1999
(73) Patentinhaber: Acordis Kelheim GmbH, 93309 Kelheim (DE)
(72) Erfinder: POGGI, Tatjana, D-93342 Saal (DE); HIDASI, Geza, D-93049 Regensburg (DE)
(74) Vertreter: Fett, Günter
(86) Internationale Anmeldenummer: EP9800729
(87) Internationale Veröffentlichungsnummer: WO9838221

(56) Entgegenhaltungen:
- DE-A- 2 941 624
- DE-B- 1 151 494
- "Ullmann's Encyclopedia of Industrial Chemistry Volume A5" 1986 , VCH VERLAGSGESELLSCHAFT , WEINHEIM XP002069697 173100 siehe Seite 401 - Seite 404

## Beschreibung

Die vorliegenden Erfindung betrifft ein verbessertes Verfahren zur Herstellung von Viskose

Die Herstellung von Viskose aus cellulosehaltigen Materialien ist seit vielen Jahren bekannt. Eine ausführliche Beschreibung dieser Technologie findet sich beispielsweise in K. Götze, Chemiefasern nach dem Viskoseverfahren, Springer-Verlag, 3. Auflage, (1967) sowie im Kapitel "Viscosereyon, -spinnfasem, -schwämme" in Ullmans Enzyklopädie der technischen Chemie, Band 18, Seite 131-177 und Band 9, Seite 213-222.

Die einzelnen Schritte des Viskoseprozesses können wie folgt kurz zusammengefaßt werden:
Chemiezellstoff oder ein anderer geeigneter cellulosehaltiger Rohstoff wird mit einer wäßrigen Lösung von Natronlauge behandelt, deren Konzentration üblicherweise zwischen 18 und 22 % beträgt, um die sogenannte Alkalicellulose zu erhalten. Die Alkalisierung wird heute überwiegend nach dem sogenannten Maischalkalisierung-Verfahren durchgeführt. Dabei wird der cellulosehaltige Rohstoff in einem mit geeigneten Dispergiereinrichtungen versehenen Behälter oder Behältersystem in der wäßrigen Natronlaugelösung dispergiert. Dabei bildet sich Alkalicellulose. Die gebildete Dispersion wird oftmals auch als Maische bezeichnet und weist in der Regel einen Feststoffgehalt von 2-6% auf. Durch Abtrennen der überschüssigen Flüssigkeit in Walzen- oder Bandpressen isoliert erhält man die gebildete Alkalicellulose. Diese besteht aus ca. 30-36% cellulosischem Material, ca. 15-20% NaOH und Wasser. Die abgetrennte Natronlauge wird anschließend in die Maischalkalisierung zurückgeführt. Durch Zufuhr von frischer Natronlauge und den Abzug eines Teilstromes wird die Zusammensetzung in diesem Kreislauf-Laugesystem konstant auf den gewünschten Werten gehalten.
Die isolierte Alkalicellulose wird vorgereift, d. h. der Einwirkung von Luft ausgesetzt, um einen oxydativen Abbau zu erreichen. Dadurch werden die Cellulosemoleküle (Depolymerisiert) auf die für den weiteren Prozeß geeignete Kettenlänge gebracht. Dieser Schritt (Vorreife) benötigt bis zu 1,5 Tagen Verweilzeit.

Die vorstehende Alkalisierung der Cellulose kann auch durch Maischalkalisierung von sogenanntem elektronenbehandeltem cellulosehaltigen Material erfolgen. Diese Elektronenbehandlung des cellulosehaltigen Materials wird beispielsweise in DE-A-2,941,624 detailiert beschrieben. Hier wird vorgeschlagen, Zellstoff vor dem Einsatz für die Viskoseherstellung mit Elektronenstrahlen in einem Dosisbereich von 1 - 30 kGy zu behandeln. Dies führt zu einer höheren Wirtschaftlichkeit des Verfahrens, da elektronenbehandeltes cellulosehaltiges Material mittels verdünnterer Natronlauge (Konzentrationen von weniger als 18 %) alkalisiert werden kann als dies bei unbehandelter Cellulose möglich ist, so daß sich der Natronlauge-Verbrauch deutlich reduziert. Gleichzeitig wird die Reaktivität der Cellulose gegenüber Schwefelkohlenstoff erhöht. Bei richtiger Führung der Elektronenbehandlung kann die Kettenlänge der Cellulose auf einen Wert eingestellt werden, der einen weiteren Vorreifeschritt entbehrlich macht. Die erhöhte Reaktivität eröffnet die Möglichkeit den Verbrauch an Schwefelkohlenstoff zu reduzieren.

Anschließend wird die Alkalicellulose mit Schwefelkohlenstoff zur Reaktion gebracht. Bei dieser Xanthogenierung bildet sich aus der Alkalicellulose ein Cellulosexanthogenat. Die Umsetzung erfolgt üblicherweise innerhalb 3 Stunden mit einer Schwefelkohlenstoffmenge, die üblicherweise bei 28 bis 32 Gew.-% des in der Alkalicellulose enthaltenen cellulosischen Materials liegt, bei Temperaturen von etwa 25 bis 30°C. Das entstehende Cellulosexanthogenat fällt als orangegelbe, krümelige Masse an.

Das Cellulosexanthogenat wird nachfolgend in verdünnter Natronlauge gelöst. Das in Natronlauge gelöste Cellulosexanthogenat ist die sogenannte Viskose.

Die Viskose wird durch Lagerung bei etwa Umgebungstemperatur über mehrere Stunden nachgereift (Nachreife). Während dieser Zeit erfolgt eine Umverteilung der Xanthogenatgruppen entlang der Celluloseketten. Während der Nachreifezeit werden auch andere Verfahrensschritte wie Filtration und Entlüftung durchgeführt.

Zur Herstellung geformter Gebilde, beispielsweise von Fasern wird die nachgereifte Viskose durch schmale Öffnungen in ein Spinnbad gedrückt. Das Spinnbad hat üblicherweise sauren Charakter und enthält gewöhnlich Schwefelsäure (ca. 10%), Natriumsulfat (ca. 20%) sowie kleinere Mengen an Zinksulfat (ca. 1%). Im Spinnbad koaguliert die Viskose unter Bildung von Fasern. Einhergehend mit der Koagulation wird auch die Cellulose aus dem Cellulosexanthogenat regeneriert. Das regenerierte faserförmige Celluloseprodukt wird anschließend geschnitten, von Begleitstoffen und Verunreinigungen freigewaschen und getrocknet.

Durch Variierung der Prozessparameter bei der Viskoseherstellung, sowie beim Spinnen können die Eigenschaften der Produkte in Grenzen beeinflußt werden.

Bei der Herstellung von Produkten aus Viskose ist ein ganz wesentlicher Kostenfaktor der Verbrauch von Chemikalien wie Schwefelkohlenstoff, Natronlauge und Schwefelsäure. Der Reduzierung der Chemikalienverbräuche sind jedoch prozeßtechnische Grenzen gesetzt. Sinkt der Schwefelkohlenstoff- und/oder Natronlaugeeinsatz unter gewisse Grenzen, verschlechtert sich die Filtrierbarkeit der Viskose. Eine gute Filtrierbarkeit der Viskose ist eine unabdingbare Vorraussetzung für eine wirtschaftlich sinnvolle Durchführung des gesamten Verfahrens.

In der Vergangenheit gab es immer Bestrebungen, die Wirtschaftlichkeit des Viskoseprozeßes durch Reduzierung der Chemikalienverbräuche zu verbessern. Eine Möglichkeit dazu bietet die Anwendung von elektronenbehandeltem Zellstoff.

Neben der Möglichkeit, für die gesamte Produktion elektronenbehandelten Zellstoff einzusetzen, kann in einem Produktionsbetrieb die Notwendigkeit bestehen, teilweise auch noch normalen, unbehandelten Zellstoff einzusetzen.
Wie bereits dargelegt, benötigt die aus elektronbehandelter Cellulose hergestellte Alkalicellulose keine Vorreife mehr, so daß diese mit aus unbehandelter Cellulose hergestellter Alkalicellulose erst nach deren Vorreife gemischt werden kann.
In bestimmten Fällen kann es nützlich oder erforderlich sein, die beiden Alkalicellulose-Produktarten bis zum Fertigprodukt getrennt zu halten.

In beiden Fällen ist es jedoch von wirtschaftlichem Vorteil, die Alkalisierung mit einem gemeinsamen Laugesystem durchzuführen. Neben der einfacheren apparativen Ausrüstung spricht auch die einfachere Verfahrensführung für diese Lösung. Verwendet man jedoch für die Alkalisierung von elektronenbehandeltem Zellstoff die gleiche Lauge, mit dem der unbehandelte Zellstoff zuvor alkalisiert wurde, so zeigt sich eine Unverträglichkeit, die sich in einer dramatisch verschlechterten Filtrierbarkeit der hergestellten Viskose offenbart. Dies wird durch Beispiel 1 dokumentiert.

Es bestand daher ein Bedürfnis nach einem Verfahren zur Herstellung von Viskose bei dem in der Alkalisierung von elektronbehandeltem cellulosehaltigem Material eine bereits zuvor in der Alkalisierung von unbehandelter Cellulose eingesetzte Lauge eingesetzt werden kann und das die zuvor beschriebene Unverträglichkeit nicht aufweist. Die Verwendung eines gemeinsamen Laugesystems für beide Rohstoff-Quellen stellt eine weitere Verbesserung der Wirtschaftlichkeit der Viskoseproduktion dar, da eine getrennte Handhabung der Alkalisierungslauge entfallen kann.

Es wurde nun überraschenderweise gefunden, daß die zuvor beschriebene Unverträglichkeit der Laugensystem vermieden werden kann, wenn die aus der Alkalisierung der unbehandelten Cellulose anfallende Lauge vor Einsatz in der Alkalisierung von elektronbehandelter Cellulose einer Behandlung unterzogen wird, so daß in der Lauge vorhandene dispergierten Feststoffe weitgehend entfernt werden. Eine so hergestellte Viskose zeigt einen für großtechnische Produktionsverfahren akzeptablen Filterwert.

Gegenstand der vorliegenden Erfindung ist ein Verfahren zur Herstellung von Viskose umfassend die Schritte:
a) Dispergieren von elektronenbehandeltem cellulosehaltigem Material in einer wässrigen Lösung von Natronlauge in an sich bekannter Weise,
b) Abtrennnen überschüssiger Natronlauge von der gebildeten Alkalicellulose in an sich bekannter Weise,
c) Xanthogenierung der gemäß Schritt b) erhaltenen Alkalicellulose durch Umsetzung mit Schwefelkohlenstoff in an sich bekannter Weise,
d) Lösen des gemäß Schritt c) gebildeten Cellulosexanthogenats in einer wässrigen Lösung einer Lauge in an sich bekannter Weise,
dadurch gekennzeichnet, daß die in Schritt a) eingesetzte Natronlauge zuvor in der Alkalisierung von elektronenunbehandelter Cellulose verwendet und derart behandelt wurde, daß der Gehalt an dispergierten Feststoffen in der Lauge 0,16 g/l nicht übersteigt.

Dispergierte Feststoffe im Sinne der vorliegenden Erfindung sind in der Natronlauge enthaltene ungelöste Verunreinigungen, die aus der Alkalisierung von elektronenunbehandelter Cellulose resultieren. Die zuvor in der Alkalisierung von elektronenunbehandelter Cellulose eingesetzte Natronlauge wird auch als Betriebslauge bezeichnet. Diese wird gegebenenfalls vor dem Schritt a) durch Verdünnen oder Zusatz von frischer Natronlauge auf die erforderliche Konzentration eingestellt. Die Bestimmung der in der Betriebslauge dispergierten Feststoffe erfolgt durch Filtration einer definierten Menge der Betriebslauge mittels einer G3 Glasfritte und nachfolgender quantitativer Bestimmung des Filterkuchens.

Bei dem gemäß Schritt a) eingesetzten elektronbehandelten cellulosehaltigen Material handelt es sich bevorzugt um solches Material was mit einer Elektronenstrahl-Dosis von 1 bis 30 kGy behandelt wurde. Vorzugsweise enthält die elektronenbehandelte Cellulose mindestens 85 Gew.-%, insbesondere 90 bis 98 Gew.-%, alpha-Cellulose.

Die Alkalisierung des elektronenbehandelten cellulosehaltigen Materials erfolgt durch Umsetzung mit einer wässrigen Lösung von Natronlauge, die zuvor in der Alkalisierung von elektronenunbehandelter Cellulose eingesetzt wurde. Wesentlich ist, daß diese einer Behandlung unterzogen wurde, so daß der Gehalt an dispergierten Feststoffen in der Natronlauge 0,16 g/l nicht übersteigt. Hierzu kann die Lauge mit dem Fachmann bekannten Techniken aufgearbeitet werden. Geeignete Maßnahmen sind beispielsweise Filtration, Zentrifugieren, Sedementieren oder gleichwirkende Fest/Flüssig-Trenntechniken.

Die Konzentration der Natronlauge beträgt üblicherweise zwischen 14 und 20 Gew.-% NaOH, insbesondere zwischen 15 und 17 Gew.-% NaOH. Die Konzentration der eingesetzten wässrige Lösung von Natronlauge wird durch Zugabe von Wasser und/oder Natronlauge eingestellt.

Nachfolgend wird überschüssige Natronlauge abgetrennt. Dies kann beispielsweise durch Abpressen, Zentrifugieren oder andere geeignete Maßnahmen erfolgen. Die gemäß Schritt b) vorliegende Alkalicellulose enthält üblicherweise 28 bis 38 Gew.-%, vorzugsweise zwischen 30 und 35 Gew.-%, Cellulose und zwischen 12 und 18 Gew.-%, vorzugsweise 14 bis 17 Gew.-%, Natronlauge (NaOH). Der Polymerisationsgrad (DP) der Alkalicellulose beträgt zwischen 200 und 500, vorzugsweise 250 und 400. Die Bestimmung des Polymerisationsgrades erfolgt durch Viskosimetrie einer Lösung von Alkalicellulose in einem wässrigen Metall/Amin-Komplex gemäß TAPPI Standard T 206.

Die Xanthogenierung der Alkalicellulose (Schritt c) erfolgt durch Umsetzung mit 15 bis 35%, vorzugsweise 15 bis 25%, Schwefelkohlenstoff. Üblicherweise erfolgt die Xanthogenierung bei Raumtemperatur oder leicht erhöhter Temperatur.

Anschließend wird das gebildete Cellulosexanthogenat mit einer wässrigen Lauge gelöst. Als wässrige Lauge wird vorzugsweise Natronlauge eingesetzt. Die sich ausbildende basische Lösung des Cellulosexanthogenats wird als Viskose bezeichnet. Diese enthält üblicherweise 7 bis 11 Gew.-%, vorzugsweise 8 bis 10 Gew.-%, Cellulose und 3 bis 8 Gew.-%, vorzugsweise 3,8 bis 5 Gew.-% NaOH. Neben diesem Bestandteilen kann die Viskose noch weitere Zusätze enthalten, die beispielsweise das Spinnverhalten der Viskose verbessern. Erwähnt seien hierbei insbesondere glykolartige- und aminhaltige Modifizierungsmittel.

Die Viskose kann anschließend in bekannter Weise zur Herstellung geformter Gebilde, beispielsweise von Fasern oder Folien, eingesetzt werden, was ebenfalls Gegenstand der vorliegenden Erfindung ist. Hierbei wird die Cellulose aus dem Cellulosexanthogenat regeneriert.

Vor dem Formgebungsprozess wird die Viskose einer Fitration unterzogen. Hierbei zeigt sich im Falle der Verwendung von Natronlaugen deren Gehalt an dispergierten Feststoffen mehr als 0,16 g/l beträgt, die zuvor bechriebene Unverträglichkeit, d.h. die Viskose zeigt einen Filterwert von mehr als 700.

Die nachfolgenden Beispiele erläutern die vorliegende Erfindung ohne sie zu beschränken:

### Beispiel 1

300 g elektronenbehandelter Viskosezellstoff wurde mit Alkalisierlauge (200 g/l NaOH), die einer großtechnischen Produktionsanlage (Einsatz von unbehandelter Cellulose/Betriebslauge) entnommen wurde, im Maischverfahren alkalisiert und anschließend durch Zentrifugieren auf eine Zusammensetzung von 32,5 % Cellulose und 15,2 % NaOH gebracht. Die so erhaltene Alkalicellulose wurde mit 28 % Schwefelkohlenstoff (bezogen auf den Cellulosegehalt) Xanthogeniert. Durch Lösen mit verdünnter Natronlauge wurden die nachfolgend in der Spalte "Betriebslauge" gezeigten Viskoseeigenschaften erhalten.

In der gleichen Weise wurde eine Vergleichsviskose unter Verwendung von frisch angesetzter Alkalisierlauge gleicher Konzentration hergestellt. Die Eigenschaften dieser Viskose sind in der Spalte "Frischlauge" dargestellt.

| | Betriebslauge | Frischlauge |
|---|---|---|
| Cellulose in der Viskose in % | 9,0 | 9,0 |
| NaOH in der Viskose, % | 4,0 | 4,0 |
| Filterwert | 2040 | 152 |

Der hier verwendete Filterwert für die Charakterisierung der Filtrierbarkeit zeigt folgende Filtrierverhalten im Betrieb an:

| Filterwert | Betriebliche Filtrierbarkeit |
|---|---|
| <400 | sehr gut |
| 400-500 | gut |
| 500-600 | mäßig |
| 600-700 | schlecht |
| >700 | unfiltrierbar |

Die Ergebnisse zeigen, daß die Anwendung einer betrieblichen Alkalisierlauge, d.h. einer Lauge die zuvor in der Alkalisierung von unbehandelter Cellulose eingesetzt und nachfolgend nicht filtriert wurde, zu einer nicht filtrierbaren Viskose führt.
Das erfindungsgemäße Verfahren bietet eine Lösung für eine gemeinsame Nutzung eines Alkalisiersystems für unbehandelten und elektronenbehandelten Zellstoff.

Überraschenderweise wurde nun gefunden, daß die oben erwähnte und im Beispiel 1 belegte Unverträglichkeit auf in der betrieblichen Alkalisierlauge dispergierte Feststoffe zurückzuführen ist, die sich - beispielsweise durch eine mechanische Filtration - entfernen lassen. Wird die betriebliche Alkalisierlauge vor ihrem Einsatz zur Alkalisierung von elektronenbehandeltem Zellstoff zunehmend scharf Filtriert, ergeben sich zunehmend bessere Filtrationseigenschaften der hergestellten Viskose, wie dies die Versuchsreihe im Beispiel 2 zeigt.

### Beispiel 2

Jeweils 300 g elektronenbehandelter Viskosezellstoff wurde mit Alkalisierlauge (190 g NaOH /I), die einer großtechnischen Produktionsanlage (Einsatz von unbehandelter Cellulose/Betriebslauge) entnommen wurde, und vor dem Einsatz unterschiedlich intensiv filtriert wurde, so daß unterschiedliche Konzentrationen von dispergierten Feststoffen in der Lauge verbleiben, im Maischverfahren alkalisiert. Anschließend wurde die resultierende Alkalicellulose durch Zentrifugieren auf eine Zusammensetzung von 31,8-32,2 % Cellulose und 16,2-16,4 % NaOH gebracht und mit 22 % Schwefelkohlenstoff (bezogen auf den Cellulosegehalt) xanthogeniert. Durch Lösen mit verdünnter Natronlauge wurden Viskosen mit einem Cellulosegehalt von 8,9-9,0% und einem NaOH-Gehalt von 4,0-4,1% hergestellt. Als Maß für die Intensität der Filtration wurde die Konzentration der mit einer Glasfritte G3 aus der Alkalisierlauge noch abfiltrierbaren Beimengungen benutzt.

| Probe Nr. | Beimengungen in der Alkalisierlauge (g/l) | Filterwert |
|---|---|---|
| 1 | 1,25 | 5680 |
| 2 | 0,46 | 945 |
| 3 | 0,28 | 739 |
| 4 | 0,16 | 498 |
| 5 | 0,03 | 247 |
| 6 | 0,008 | 193 |
| 7 | 0,002 | 196 |
| 8 | 0,000 | 170 |

Für die Beurteilung der Filtrierbarkeit der Viskosen kann die im Beispiel 1 angegebene Skala herangezogen werden.

Die Ergebnisse zeigen, daß wenn die zur Alkalisierung eingesetzte Lauge einen Gehalt von 0,28 g/l an dispergierten Feststoffen aufweist, die damit hergestellte Viskose großtechnisch nicht mehr filtrierbar ist. Gute Filtrationseigenschaften sind nur dann erreichbar, wenn der Gehalt an abfiltrierbaren Feststoffen 0,16 g/l nicht überschreitet.

## Patentansprüche

1. Verfahren zur Herstellung von Viskose umfassend die Schritte:
a) Dispergieren von elektronenbehandeltem cellulosehaltigem Material in einer wässrigen Lösung von Natronlauge in an sich bekannter Weise,
b) Abtrennnen überschüssiger Natronlauge von der gebildeten Alkalicellulose in an sich bekannter Weise,
c) Xanthogenierung der gemäß Schritt b) erhaltenen Alkalicellulose durch Umsetzung mit Schwefelkohlenstoff in an sich bekannter Weise,
d) Lösen des gemäß Schritt c) gebildeten Cellulosexanthogenats in einer wässrigen Lösung einer Lauge in an sich bekannter Weise,
dadurch gekennzeichnet, daß die in Schritt a) eingesetzte Natronlauge zuvor in der Alkalisierung von elektronenunbehandelter Cellulose verwendet und derart behandelt wurde, daß der Gehalt an dispergierten Feststoffen in der Lauge 0,16 g/l nicht übersteigt.

2. Verfahren gemäß Anspruch 1, dadurch gekennzeichnet, daß die Konzentration der Natronlauge in Schritt a) 14 bis 20 Gew.-% NaOH entspricht.

3. Verfahren gemäß Anspruch 1, dadurch gekennzeichnet, daß der Gehalt an dispergierten Feststoffen der in Schritt a) eingesetzten Natronlauge durch der Filtration über ein G3 Glasfritte bestimmt wird.

4. Verfahren gemäß Anspruch 1, dadurch gekennzeichnet, daß die in Schritt a) eingesetzte Natronlauge maximal 0,03 g/l an dispergierten Feststoffen enthält.

5. Verfahren gemäß Anspruch 1, dadurch gekennzeichnet, daß die in Schritt a) eingesetzte Natronlauge durch Filtration und/oder Zentrifugieren behandelt wurde.

## Claims

1. A process for producing viscose, which comprises the steps of:
a) dispersing electron-treated cellulosic material in an aqueous solution of caustic soda in a conventional manner,
b) removing excess caustic soda from the resulting alkali cellulose in a conventional manner,
c) xanthating the alkali cellulose obtained as per step b) by reaction with carbon disulfide in a conventional manner,
d) dissolving the cellulose xanthate formed as per step c) in an aqueous solution of a lye in a conventional manner,
wherein the caustic soda used in step a) was previously used in the alkalization of electron-untreated cellulose and treated in such a way that the level of dispersed solids in the caustic does not exceed 0.16 g/l.

2. The process of claim 1, wherein the concentration of the caustic soda in step a) corresponds to 14 to 20% by weight of NaOH.

3. The process of claim 1, wherein the level of dispersed solids in the caustic soda used in step a) is determined by filtration through a G3 glass frit.

4. The process of claim 1, wherein the caustic soda used in step a) comprises not more than 0.03 9/l of dispersed solids.

5. The process of claim 1, wherein the caustic soda used in step a) was treated by filtration and/or centrifugation.

## Revendications

1. Méthode de fabrication de la viscose comprenant les étapes :
a) disperser un matériau contenant de la cellulose qui a été traité à l'aide d'électrons dans une solution aqueuse de lessive de soude caustique d'une manière connue en soi,
b) séparer la lessive de soude caustique surnageante de la cellulose alcaline formée d'une manière connue en soi,
c) convertir en ester xanthogénique la cellulose alcaline obtenue conformément à l'étape b) par réaction avec du sulfure de carbone d'une manière connue en soi,
d) dissoudre le xanthogénate de cellulose obtenu conformément à l'étape c) dans une solution aqueuse de lessive alcaline d'une manière connue en soi,
la méthode étant caractérisée par le fait que la lessive de soude caustique employée dans l'étape a) a été au préalable utilisée lors de l'alcalisation de la cellulose non traitée à l'aide d'électrons et a été traitée de manière à ce que la teneur en matières solides dispersées présentes dans la lessive alcaline ne dépasse pas 0,16 g/l.

2. Méthode conforme à la revendication 1, caractérisée par le fait que la concentration de la lessive de soude caustique de l'étape a) correspond à un pourcentage pondéral de NaOH situé entre 14% et 20%.

3. Méthode conforme à la revendication 1, caractérisée par le fait que la teneur en matières solides dispersées de la lessive de soude caustique utilisée dans l'étape a) est déterminée par filtration à l'aide d'une fritte de verre G3.

4. Méthode conforme à la revendication 1, caractérisée par le fait que la lessive de soude caustique utilisée dans l'étape a) contient 0,03 g/l de matières solides dispersées maximum.

5. Méthode conforme à la revendication 1, caractérisée par le fait que la lessive de soude caustique utilisée dans l'étape a) a été traitée par filtration et/ou centrifugation.
